**Europäisches Patentamt**

**European Patent Office**

**Office européen des brevets**

(19)

(11) Veröffentlichungsnummer : **0 009 666**
**B1**

# (12) EUROPÄISCHE PATENTSCHRIFT

(45) Veröffentlichungstag der Patentschrift :
30.09.81

(21) Anmeldenummer : 79103365.7

(22) Anmeldetag : 10.09.79

(51) Int. Cl.³ : **B 01 F 7/06, A 21 C 1/06, A 21 C 1/14**

(54) **Misch- und Knetwerkzeug, insbesondere für eine hochtourige Teigknetmaschine.**

(30) Priorität : 05.10.78 DE 2843369

(43) Veröffentlichungstag der Anmeldung :
16.04.80 (Patentblatt 80/08)

(45) Bekanntmachung des Hinweises auf die Patenterteilung : 30.09.81 Patentblatt 81/39

(84) Benannte Vertragsstaaten :
CH FR GB IT NL SE

(56) Entgegenhaltungen :
DE - C - 172 211
FR - A - 1 169 993
GB - A - 302 556

(73) Patentinhaber : A. Stephan u. Söhne GmbH & Co
Stephanplatz 2
D-3250 Hameln (DE)

(72) Erfinder : Eusterbarkey, Friedhelm
Gustav-Bermannstrasse 10
D-3280 Bad Pyrmont (DE)

(74) Vertreter : Gramm, Werner, Dipl.-Ing. et al
Patentanwälte Gramm + Lins Theodor-Heuss-Strasse 2
D-3300 Braunschweig (DE)

EP 0 009 666 B1

« Misch- und Knetwerkzeug, insbesondere für eine hochtourige Teigknetmaschine »

Die Erfindung betrifft ein Misch- und Knetwerkzeug für eine horizontal in einen Misch- und Knetbehälter ragende, motorisch angetriebene Werkzeugwelle, insbesondere für eine hochtourige Teigknetmaschine, bestehend aus zwei bezogen auf die Drehachse nebeneinander und in Umlaufrichtung um 180° gegeneinander versetzt angeordnete Flügel, die in Seitenansicht gemeinsam angenähert die Kurve einer Sinusfunktion mit nur einer vollen Periode bilden.

Eine derartige Ausführungsform läßt sich der DE-C-172 211 entnehmen. Offenbart ist ein Teigknettrop, in dem das Misch- und Knetwerkzeug beidseitig gelagert ist. Die beiden Werkzeugflügel liegen in einer gemeinsamen, durch die Drehachse gehenden Längsmittelebene. Das Werkzeug weist keinen durchgehenden Werkzeugträger auf, sondern ist mit seitlich am Werkzeug befestigten Drehzapfen in den beiden Stirnwandungen des Teigknettroges gelagert. Über die Drehzahl des Werkzeuges ist in der Vorveröffentlichung zwar nichts ausgesagt, da die Vorveröffentlichung aber aus dem Jahre 1905 datiert, handelt es sich um ein langsam umlaufendes Knetwerkzeug (Umdrehungszahl etwa 20 bis 80 UpM), da erst etwa 60 Jahre später hochtourige Teigknetmaschinen auf den Markt kamen, bei denen der Drehzahlbereich der Knetwerkzeuge zwischen 750 und 1800 U/min liegt.

Der Anwendung hochtourig umlaufender Knetwerkzeuge stand die Sorge entgegen, daß die dadurch während des Knetprozesses entstehenden erheblich höheren Temperaturen zu einer wesentlichen Beeinträchtigung der Qualität des hergestellten Teiges führen müßten. Es wurden daher für hochtourige Teigknetmaschinen spezielle Werkzeuge entwickelt, die sich z.B der DE-C-1 166 715, der DE-C-1 189 483 sowie der DE-A-24 34 330 entnehmen lassen. Diese Werkzeuge sind in Draufsicht gesehen leicht sichelförmig ausgebildet und weisen einen entgegen der Umlaufrichtung zunehmenden Querschnitt auf.

Durch eingehende Untersuchungen konnte nunmehr festgestellt werden, daß beim Einsatz dieser bekannten Knetwerkzeuge der Reibungsanteil im Verhältnis zum Knetanteil relativ hoch liegt. Dies ist insbesondere bei Herstellung bestimmter Teige nachteilig, die im Herstellungsprozeß nicht über eine vorgegebene Endtemperatur kommen dürfen.

Ausgehend von dieser Erkenntnis liegt der Erfindung die Aufgabe zugrunde, das eingangs beschriebene Misch- und Knetwerkzeug so zu verbessern, daß es neben einer guten Vormischung der Teigbestandteile auch bei hochtourigem Umlauf eine optimale Knetwirkung bei nur geringer Temperatursteigerung im Teig ermöglicht.

Diese Aufgabe wird gemäß der Erfindung dadurch gelöst, daß die Flügel in Stirnansicht gemeinsam eine scheinbar geschlossene Kurve in Form eines flachgedrückten Ovals oder eines flachen Rechteckes bilden und an einem hülsenförmigen, auf die horizontal angeordnete Werkzeugwelle aufsteckbaren Werkzeugträger befestigt, vorzugsweise angeschweißt sind.

Die Flügel des neuen Werkzeuges liegen also nicht in einer gemeinsamen, durch die Drehachse gehenden Längsmittelebene, sondern sind in Axialrichtung verwunden, wobei je nach der gewählten Steigung eine Materialförderung in der einen oder anderen Axialrichtung erzielt werden kann.

Das neue Misch- und Knetwerkzeug bewegt das Material somit sowohl in radialer als auch in axialer Richtung und arbeitet optimal bei horizontal liegender Werkzeugwelle, also bei liegend angeordnetem Behälter. Eine derartige Knetmaschine läßt sich beispielsweise der DE-A-24 34 330 entnehmen. Bei derartigen Knetmaschinen muß es möglich sein, die eine Stirnwandung des Trommelbehälters als abschwenkbaren Stirndeckel auszubilden. Dies aber ist nur dann möglich, wenn eine nur einseitige Lagerung des Knetwerkzeuges vorgesehen werden kann.

Die Scheitel der Sinuskurve können abgeflacht sein. Die Form jedes Flügels läßt sich dann auch mit der eines Trapezes vergleichen.

Die Reibung liegt dann besonders niedrig, wenn die beiden Flügel aus einem gebogenen Strangmaterial, insbesondere aus einem gebogenen Rundmaterial bestehen. Mit einer derartigen Ausführungsform lassen sich bis zu 20 % kühlere Teige herstellen, die dann auf den Nachfolgemaschinen besonders gut zu verarbeiten sind und Gebäckstücke mit gleichmäßigerer Porung ergeben.

Da kühlere Teigtemperaturen bisher durch entsprechend gekühltes Rezeptwasser erreicht wurden, wird bei Einsatz des neuen Werkzeuges außer einer Qualitätsverbesserung beim Gebäck auch eine erhebliche Energieeinsparung erzielt.

Weitere zweckmäßige Gestaltungsmerkmale des neuen Werkzeuges sind in den Unteransprüchen aufgeführt.

In der Zeichnung ist eine als Beispiel dienende Ausführungsform der Erfindung dargestellt. Es zeigen :

Figur 1 ein Misch- und Knetwerkzeug in Seitenansicht ;

Figur 2 das Werkzeug gemäß Fig. 1 in Stirnansicht und

Figur 3 einen Schnitt gemäß der Linie III-III in Fig. 1.

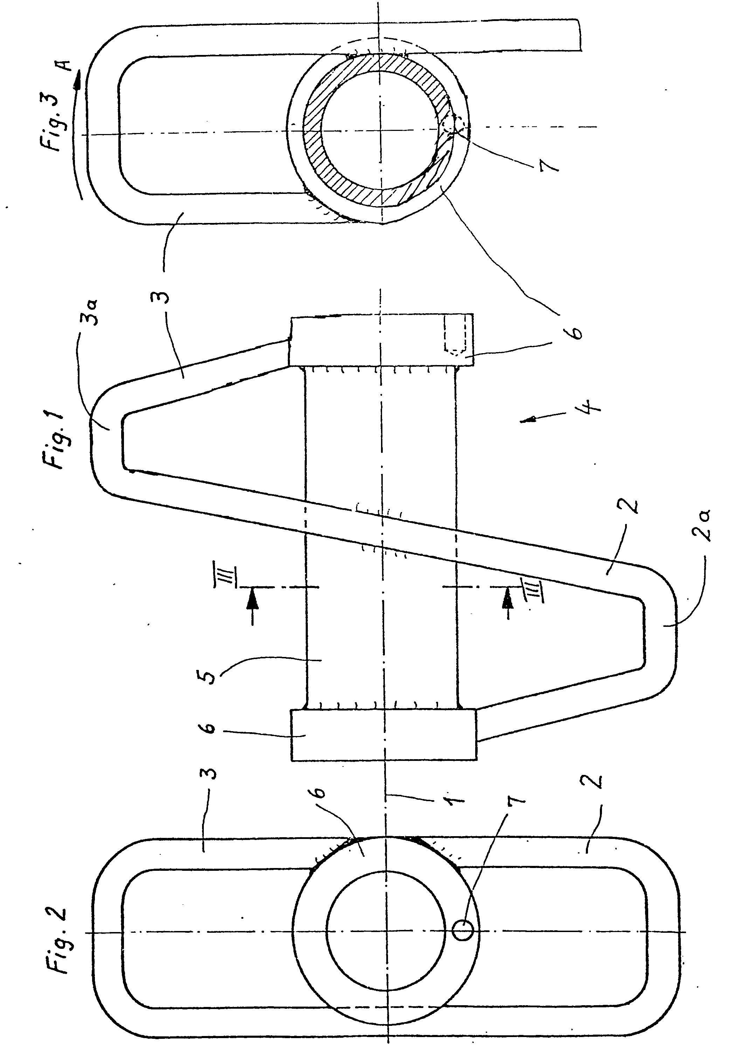

Danach besteht das dargestellte Misch- und Knetwerkzeug aus zwei bezogen auf die Drehachse 1 nebeneinander und in Umlaufrichtung A um 180° gegeneinander versetzt angeordnete Flügel 2, 3, die in Seitenansicht gemeinsam angenähert die Kurve einer Sinusfunktion mit voller Periode bilden. Figur 1 läßt erkennen, daß die Scheitel 2a, 3a der Sinuskurve etwas abgeflacht sind. Figur 2 zeigt, daß die beiden Flügel 2, 3 in Stirnansicht gemeinsam eine scheinbar geschlossene Kurve in Form eines flachen Rechteckes bilden.

Jeder Flügel 2, 3 besteht aus einem gebogenen Rundmaterial, das an einem Werkzeugträger 4 angeschweißt ist. Letzterer setzt sich zusammen aus einer auf eine nicht dargestellte Werkzeugwelle aufsteckbaren Hülse 5, die stirnseitig je einen Abschlußring 6 trägt. Ein Abschlußring ist mit einem Stiftloch 7 versehen, so daß eine Drehverbindung mit der nicht dargestellten Werkzeugwelle hergestellt werden kann.

### Ansprüche

1. Misch- und Knetwerkzeug für eine horizontal in einen Misch- und Knetbehälter ragende, motorisch angetriebene Werkzeugwelle, insbesondere für eine hochtourige Teigknetmaschine, bestehend aus zwei bezogen auf die Drehachse nebeneinander und in Umlaufrichtung um 180° gegeneinander versetzt angeordnete Flügel, die in Seitennansicht gemeinsam angenähert die Kurve einer Sinusfunktion mit nur einer vollen Periode bilden, dadurch gekennzeichnet, daß die Flügel (2, 3) in Stirnansicht gemeinsam eine scheinbar geschlossene Kurve in Form eines flachgedrückten Ovals oder eines flachen Rechteckes bilden und an einem hülsenförmigen, auf die horizontal angeordnete Werkzeugwelle aufsteckbaren Werkzeugträger (4) befestigt, vorzugsweise angeschweißt sind.

2. Werkzeug nach Anspruch 1, dadurch gekennzeichnet, daß die Scheitel (2a, 3a) der Sinuskurve abgeflacht sind.

3. Werkzeug nach Anspruch 1 oder 2, dadurch gekennzeichnet, daß die beiden Flügel (2, 3) aus einem gebogenen Strangmaterial bestehen.

4. Werkzeug nach Anspruch 1, 2 oder 3, dadurch gekennzeichnet, daß der Werkzeugträger (4) stirnseitig mit je einem Abschlußring (6) versehen ist.

### Claims

1. Mixing and kneading tool for a motor-driven tool shaft extending horizontally into a mixing and kneading container, in particular for a highspeed dough kneading machine consisting of two wings which are arranged adjacent to each other on the rotary axis and which are mutually offset by 180° in a direction of rotation, both wings together resembling approximately the curve of a sine function with one full cycle only, when viewed from the side, characterised in that, seen in the direction of the axis, the wings (2, 3) together appear to form a closed curve in the form of a flattened oval or a flat rectangle, and in that they are attached, e.q. welded for preference, to a sleeve-like tool carrier (4) which can be located on the horizontally arranged tool shaft.

2. Tool according to claim 1, characterised in that the crests (2a, 3a) of the sine curve are flattened.

3. Tool according to claim 1 or 2, characterised in that the two wings (2, 3) consist of a bent rail material.

4. Tool according to claim 1, 2 or 3, characterised in that the tool carrier (4) is equipped with an end ring (6) at each end.

### Revendications

1. Outil mélangeur et pétrisseur pour un arbre à outil entraîné par moteur s'étendant horizontalement dans un récipient de mélange et de pétrissage, en particulier pour une machine à pétrir la pâte à haut régime, formé de deux ailes qui sont disposées l'une à côté de l'autre par rapport à l'axe de rotation, qui sont décalées l'une de l'autre de 180° dans le sens de la rotation et qui, vues en élévation de côté, forment ensemble à peu près la courbe d'une fonction sinusoïdale présentant une seule période complète, caractérisé en ce que les ailes (2, 3) vues en bout, forment ensemble une courbe apparemment fermée ayant la forme d'un ovale aplati ou d'un rectangle plat et sont fixées, de préférence soudées, à un porte-outil tubulaire (4) pouvant être glissé sur l'arbre à outil horizontal.

2. Outil suivant la revendication 1, caractérisé en ce que les sommets (2a, 3a) de la courbe sinusoïdale sont aplatis.

3. Outil suivant la revendication 1 ou 2, caractérisé en ce que les deux ailes (2, 3) sont faites d'une matière filiforme pliée.

4. Outil suivant la revendication 1, 2 ou 3, caractérisé en ce que le porte-outil (4) est pourvu à chacune de ses extrémités d'une bague d'arrêt (6).

Fig. 2    Fig. 1    Fig. 3

999 6000 0